Europäisches Patentamt

European Patent Office

Office européen des brevets

(19)

(11) Veröffentlichungsnummer: **0 087 699**
**B1**

# EUROPÄISCHE PATENTSCHRIFT

(45) Veröffentlichungstag der Patentschrift:
11.06.86

(51) Int. Cl.⁴: **B 29 B 7/48**

(21) Anmeldenummer: **83101581.3**

(22) Anmeldetag: **18.02.83**

(54) **Mehrwellige, kontinuierlich arbeitende Misch- und Knetmaschine für plastifizierbare Massen mit ineinandergreifenden, gleichsinnig drehenden Schnecken konstanten Achsabstandes.**

<table>
<tr><td>(30) Priorität: 22.02.82 DE 3206325</td><td>(73) Patentinhaber: AUTOMATIK Apparate-Maschinenbau GmbH, Ostring 19, D-8754 Grossostheim 2 (DE)</td></tr>
<tr><td>(43) Veröffentlichungstag der Anmeldung:<br>07.09.83 Patentblatt 83/36</td><td>(72) Erfinder: Stade, Kurt, Dipl.-Ing., Rehhaagstrasse 5, CH-4410 Liestal (CH)</td></tr>
<tr><td>(45) Bekanntmachung des Hinweises auf die Patenterteilung:<br>11.06.86 Patentblatt 86/24</td><td>(74) Vertreter: Bardehle, Heinz, Dipl.-Ing., Patent- und Rechtsanwälte Bardehle-Pagenberg-Dost-Altenburg & Partner Postfach 86 06 20, D-8000 München 86 (DE)</td></tr>
<tr><td>(84) Benannte Vertragsstaaten:<br>BE CH DE FR GB IT LI NL</td><td></td></tr>
<tr><td>(56) Entgegenhaltungen:<br>DE - A - 2 351 328<br>DE - A - 2 614 136<br>DE - A - 3 026 842<br>DE - B - 2 513 577<br>FR - A - 2 256 825<br>GB - A - 1 273 502<br>US - A - 3 445 890<br>US - A - 3 453 356<br>US - A - 4 110 844<br>US - A - 4 131 371</td><td></td></tr>
</table>

## Beschreibung

Die Erfindung bezieht sich auf eine mehrwellige, kontinuierlich arbeitende Misch- und Knetmaschine für plastifizierbare Massen, mit selbstreinigend ineinandergreifenden, gleichsinnig drehenden Schnecken konstanten Achsabstandes, mit einer Aufschmelzzone und einer sich hieran anschließenden Zone vergrößerten freien Querschnitts für die Massen, wobei in dieser Zone der Außendurchmesser der Schnecken vergrößert ist.

Eine derartige Maschine mit Doppelschnecken ist aus der DE-OS 30 26 842 bekannt, wobei es sich um einen Entgasungsextruder für thermoplastische Materialien handelt. Die Maschine enthält zwei aufeinanderfolgende Zonen, nämlich eine Aufschmelzzone und eine sich hieran anschließende Entgasungszone, wobei letztere einen vergrößerten freien Querschnitt besitzt. Gemäß der Beschreibung des in dieser Druckschrift behandelten Ausführungsbeispiels wird dies dadurch erreicht, daß die Schnecken in der Aufschmelzzone eingängig und in der Entgasungszone mehrgängig ausgebildet sind, wobei in letzterer der Außendurchmesser der Schnecken vergrößert ist.

Es ist ferner aus dem DE-Gbm 1 985 743 ein Doppelschneckenextruder bekannt, der zum stufenweisen Entziehen eliminierbarer Bestandteile aus vornehmlich aus Kunststoff bestehendem Fördergut dient, d.h. zum Entgasen des in der Maschine behandelten Kunststoffs, der dann als fertig entgastes Gut aus der Maschine ausgetragen wird. Die Schnecken sind dabei so gestaltet, daß ihr Förderquerschnitt zum Austragende hin kleiner wird. Über die beiden ersten Zonen, nämlich die Aufschmelzzone und die Mischzone, in welch letzterer die Entgasung stattfindet, bleibt der Schneckendurchmesser und der Gehäusedurchmesser gleich. Zur folgenden Austragsschnecke hin verringert sich der Schnecken- und Gehäusedurchmesser, wobei der Austragteil gemäß Figur 6 der Druckschrift über seine beiden Durchmesserbereiche eingängig ausgebildet ist, während das Austragteil gemäß Figur 8 der Druckschrift im eingangsseitigen größeren Durchmesserbereich eingängig und im ausgangsseitigen kleineren Durchmesserbereich zweigängig ausgebildet ist. Ergänzend sei darauf hingewiesen, daß bei der Ausführungsform gemäß Figur 1 der Druckschrift, bei der der ausgangsseitige Bereich des Austragsteils ebenfalls mit kleinem Durchmesser ausgebildet ist, die beiden Schnecken jeweils in eigenen Gehäusen untergebracht sind, also nicht miteinander kämmen, wobei diesen Schnecken fast am Ende des Austragsteils eine Gehäuseöffnung zugeordnet ist, über die entweder aus dem geförderten Gut austretende eliminierbare Bestandteile abgeführt oder dem Gut Zusätze beigefügt werden.

Es ist weiterhin aus der DE-OS 22 36 902 bekannt, bei einer zweiwelligen Misch- und Knetmaschine für plastifizierbare Massen mit ineinandergreifenden gleichsinnig drehenden Schnecken konstanten Achsabstandes bei gleichbleibendem Außendurchmesser der Schnecken zur Erzielung einer minimalen Scherbeanspruchung in Vorschubrichtung an eine zweigängige Zone mit selbstreinigendem Profil eine eingängige Zone mit Trapezprofil anzuschließen. Auf diese Weise ergibt sich eine Maschine, in deren vorderer Zone mit höherer Gangzahl im wesentlichen die Mischung erfolgt, allerdings unter Inkaufnahme einer beträchtlichen Scherung, während in der folgenden Zone niedrigerer Gangzahl unter Vermeidung größerer Scherkräfte ein hoher Druckaufbau für das folgende Extrudieren erzielt wird.

Es ist weiterhin aus der US-PS 4 110 844 ein Entgasungsextruder bekannt, der als Einschneckenextruder mit durch— gehend eingängigen Schnecken gestaltet ist. Dabei istnach der Aufschmelzzone eine Einfüllöffnung für Zusatzstoffe vorgesehen, über die gleichzeitig Gase aus dem Extruder entweichen können.

Der Erfindung liegt die Aufgabe zugrunde, die eingangs erwähnte, mehrwellige, kontinuierlich arbeitende Mischund Knetmaschine für plastifizierbare Massen so zu gestalten, daß dem Verarbeitungsgut in besonders günstiger Weise Zusätze zugefügt werden können und diese Zusätze sich dann mit dem Verarbeitungsgut zu einer homogenen Masse vermischen.

Erfindungsgemäß geschieht dies dadurch, daß in der Zone vergrößerten freien Querschnitts eine Einfüllöffnung für Zusatzstoffe angeordnet ist und ferner die Gangzahl der Schnecken in diesem Bereich kleiner ist als die Gangzahl der Schnecken in der Aufschmelzzone

Bei dieser Maschine wird in der Aufschmelzzone, also der Zone mit höherer Gangzahl, das Verarbeitungsgut einer intensiven Einwirkung der Schnecken unterzogen, so daß das Verarbeitungsgut aufschmilzt, woraufhin dann in der folgenden Zone geringerer Gangzahl über die dieser Zone zugeordnete Einfüllöffnung die gewünschten Zusätze zugeführt werden, die die in dieser Zone aufgrund des gegenüber der vorhergehenden Zone vergrößerten freien Querschnitts den erforderlichen Platz finden, so daß sie praktisch ohne Rückstau dem Verarbeitungsgut in dieser Zone beigemischt werden können. Insbesondere ergibt sich dabei der Vorteil, daß solche Zusätze in erheblicher Menge zugeführt werden können, die wegen des vergrößerten freien Querschnitts ohne weiteres das erforderliche freie Volumen finden. Ermöglicht wird diese Vergrößerung des freien Querschnitts durch die Kombination zweier Merkmale, nämlich die Vergrößerung des Außendurchmessers der Schnecken bei gleichzeitiger Reduzierung der Gangzahl.

Die Zusatzstoffe können teilweise bereits in der Aufschmelzzone, also der Zone mit höherer Gangzahl zugeführt werden. Außerdem ist es auch möglich, daß die plastifizierbaren Anteile des Verarbeitungsguts teilweise über die Einfüllöffnung in die folgende Zone, also die Zone mit geringerer Gangzahl, eingespeist werden. Auf diese Weise läßt sich also jede gewünschte Variation der Zufuhr von Bearbeitungsgut und Zusatzstoffen ermöglichen, wobei stets das Erfordernis gewahrt ist, daß den in der Zone mit niedrigerer Gangzahl zugeführten Stoffen in dieser Zone das erforderliche freie Volumen zur Verfügung steht. Wesentlich ist dabei noch das Merkmal der in beiden Zonen gegebenen Selbstreinigung, deren für diesen Zweck erforderliche Formgebung der Schnecken an sich bekannt ist, wobei jedoch das Erfordernis der Selbstreinigung in diesem Zusammenhang noch insofern von besonderer Bedeutung ist, als es dazu führt, daß in der Zone mit geringerer Gangzahl das Gehäuse und die betreffenden Schnecken gegenüber der Aufschmelzzone vergrößert ausgebildet sind. Hierdurch wird das in diesem Zusammenhang wesentliche Merkmal der Vergrößerung des freien Querschnitts in dieser Zone unterstützt. Ein weiterer vorteilhafter Effekt, der mit der vorstehend beschriebenen Maschine erzielt wird, besteht darin, daß selbst bei Zuführung größerer Anteile von Zusatzstoffen diese keinen erheblichen Scherbeanspruchungen ausgesetzt werden, weil sie nämlich im wesentlichen in der Zone mit niedrigerer Gangzahl über die betreffende Einfüllöffnung zugeführt werden, in der aufgrund der geringeren Gangzahl geringere Scherkräfte herrschen als in der vorhergehenden Aufschmelzzone mit größerer Gangzahl.

Vorteilhaft werden in der Aufschmelzzone dreigängige Schnecken und in der darauffolgenden Zone zweigängige Schnecken vorgesehen.

Der freie Querschnitt in der mit der Einfüllöffnung versehenen Zone, also der Zone mit niedrigerer Gangzahl sollte mindestens um das 1,5 fache größer sein als der freie Querschnitt in der vorhergehenden Aufschmelzzone. Es hat sich gezeigt, daß bei einem Unterschreiten dieses Wertes die Effektivität der Maschine in der Zone niedrigerer Gangzahl so nachläßt, daß es sich praktisch nicht mehr lohnt, die Maschine mit unterschiedlichen Durchmessern für beide Zonen aufzubauen.

Wenn man die Schnecken so gestaltet, daß in den aufeinanderfolgenden Zonen die jeweilige Breite ihrer Kämme der Schneckengänge etwa das gleiche Ausmaß aufweist, ergibt sich der vorteilhafte Effekt, daß sich eine besonders hohe Vergrößerung des freien Querschnitts von der Zone höherer Gangzahl zur Zone geringerer Gangzahl ergibt, was für viele Anwendungsfälle besonders erwünscht ist.

Unter der Voraussetzung der Gestaltung der Kämme der Schneckenprofile mit minimaler Breite (je nach Durchmesser der Schnecken etwa 1,5 mm - 4 mm) lassen sich die Schnecken so gestalten, daß in der Zone mit niedrigerer Gangzahl der freie Querschnitt das 2,4-fache des freien Querschnitts der vorhergehenden Zone ist. Dies ist ein besonders hoher, erreichbarer Wert, der sich als besonders günstig erweist, wenn es sich darum handelt, besonders große Mengen an Zusatzmaterialien beizufügen.

Es ist an sich aus der DE-OS 26 14 136 bekannt, bei einer zweiwelligen, kontinuierlich arbeitenden Misch- und Knetmaschine für plastifizierbare Massen gleichsinnig drehende Schnecken zu verwenden, ohne daß dabei über die Achsabstände, die Größe des Gehäuses und der Schnecken sowie der Gestaltung der Schnecken etwas ausgesagt ist. In der DE-OS 26 14 136 wird jedoch darauf hingewiesen, daß mit einer derartigen Maschine durch an verschiedenen Stellen vorgesehene Einfüllöffnungen einerseits das Verarbeitungsgut und andererseits Füllstoffe zugeführt werden können, um auf diese Weise Materialien zu erzeugen, die aufgrund der Füllstoffe besondere erwünschte Eigenschaften aufweisen.

In der DE-AS 25 13 577 wird ein zweiwelliger Kneter beschrieben, dessen in der Mischkammer angeordnete Knetflügel einen gegenüber den nicht kämmenden Förder- und Einzugsschnecken vergrößerten Durchmesser aufweisen.

Im Gegensatz zu der hier beschriebenen Aufgabenstellung ist der erste Bereich dieser Maschine offensichtlich nicht imstande, eine Schmelze unter Einwirkung hoher Scherkräfte zu erzeugen und der im Mischbereich gebildete, vergrößerte freie Querschnitt wird nicht für die Zuführung weiteren Verarbeitungsgutes eingesetzt.

In den Figuren ist ein Ausführungsbeispiel der Erfindung dargestellt. Es zeigt:

Fig. 1 die Maschine in Seitensicht im Querschnitt, wobei die eine Schnecke die dahinterliegende verdeckt;

Fig. 2a) einen Querschnitt durch die Maschine gemäß Fig. 1 längs der Linie A-A, also durch die Zone höherer Gangzahl;

Fig. 2b) einen Schnitt durch die Maschine gemäß Fig. 1 längs der Linie B-B, also durch die Zone geringerer Gangzahl.

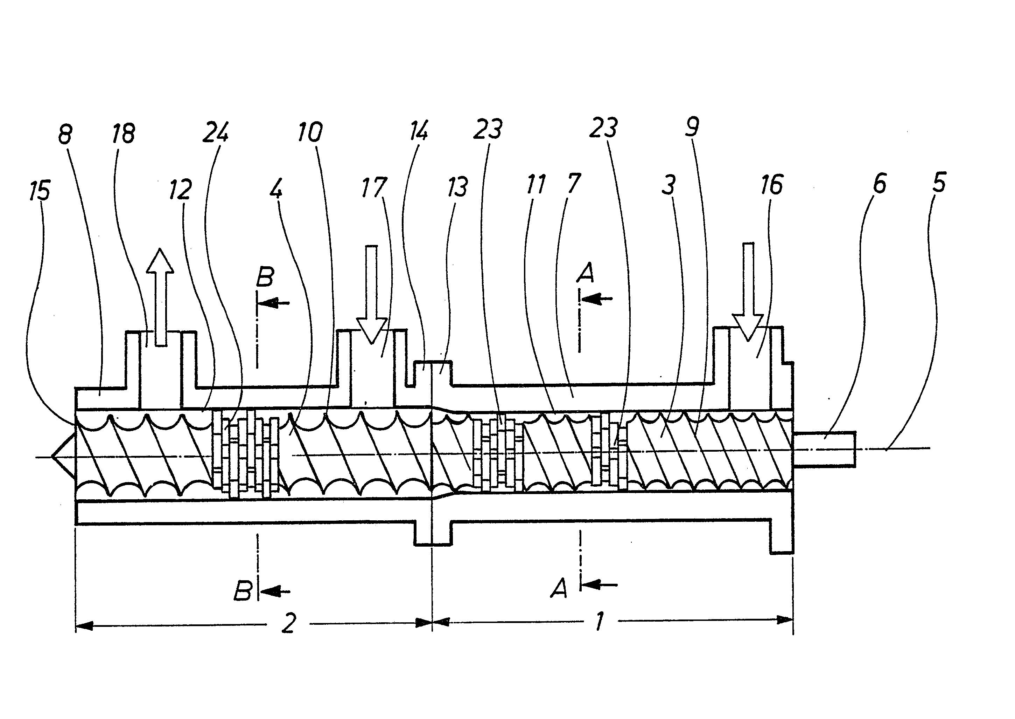

Die in der Fig. 1 dargestellte Misch- und Knetmaschine besteht aus den beiden Zonen 1 und 2, von denen die Zone 1 die dreigängigen Schnecken 3 mit Knetelementen 23 und die Zone 2 die zweigängigen Schnecken 4 mit Knetelementen 24 enthält. (In der Fig. 1 sind jeweils nur die dem Betrachter zugewandten Schnecken 3 und 4 dargestellt da die dahinterliegenden Schnecken verdeckt sind). Die Schnecken 3 und 4 besitzen die gemeinsame durch die strichpunktierte Linie 5 angedeutete Mittelachse, sie sind fest miteinander verbunden und werden in bekannter Weise über den Achsstummel 6 angetrieben.

Die beiden Schnecken 3 und 4 drehen sich jeweils in einem eigenen Gehäuse, nämlich dem Gehäuse 7 und 8, wobei, wie ersichtlich, das Gehäuse 8 einen größeren Innendurchmesser aufweist, als das Gehäuse 7. Die Kämme 9 der Schnecke 3 und die Kämme 10 der Schnecke 4 mit ihren entsprechenden Knetelementen halten von der Innenwand 11 des Gehäuses 7 bzw. von der Innenwand 12 des Gehäuses 8 jeweils etwa den gleichen Abstand, der in bekannter Weise je nach Größe der betreffenden Schnecken zwischen 0,5 mm und 1,5 mm liegen kann. Die beiden Gehäuse 7 und 8 sind über die beiden Flanschen 13 und 14 fest miteinander verbunden.

Bei Drehung der Schnecken 3 und 4 ergibt sich ein Materialvorschub von der Zone 1 zur Zone 2, bis das Material am Ende des Gehäuses 8 an der Austrittsstelle 15 aus dem Gehäuse 8 austritt und in eine nicht dargestellte Extruderdüse übergeht. Das zu plastifizierende Material wird über die Einfüllöffnung 16 dem Anfang der Schnecken 3 zugeführt und von diesen aufgrund ihrer Drehung in Richtung Zone 2 transportiert, wobei sich wegen der Dreigängigkeit der Knetelemente 23 erhebliche Scherkräfte in dem zu plastifizierenden Material ausbilden, so daß dieses aufschmilzt.

Am Anfang der Schnecken 4 ist die weitere Einfüllöffnung 17 angebracht, über die vor allem Zusatzmaterialien zugeführt werden, die sich im Bereich der Zone 2 mit dem von den Schnecken 3 transportierten, plastifizierten Material vermischen. Dabei liegt für die Zuführung der Zusatzmaterialien ein gegenüber dem freien Querschnitt im Bereich der Zone 1 wesentlich vergrößerter freier Querschnitt im Bereich der Zone 2 vor, wodurch es möglich ist, relativ große Mengen von Zusatzmaterialien, also einen erheblichen Zusatzmaterialanteil, der in der Zone 1 erzeugten Schmelze zuzuführen. Durch die in der Zone 2 angeordneten zweigängigen Knetelemente 24 werden die für die weitere Druckminderung des Verarbeitungsgutes erforderlichen Scherkräfte erzeugt. Kurz vor der Austrittsstelle 15 ist die Auslaßöffnung 18 vorgesehen, die in bekannter Weise zum Entgasen dient.

Mit der in der Fig. 1 dargestellten Maschine ist es möglich, plastifizierbare Masse sowohl über die Einlaßöffnung 16 als auch über die Einlaßöffnung 17 zuzuführen, so daß sich verschiedene Mischmöglichkeiten ergeben. So ist es vor allem möglich, außer dem über die Einlaßöffnung 17 zugeführten Hauptanteil von Zusatzmaterialien diese auch über die Einlaßöffnung 16 zuzuführen und über die Einlaßöffnung 17 in zusätzlicher Weise plastifizierbare Masse einzuspeisen.

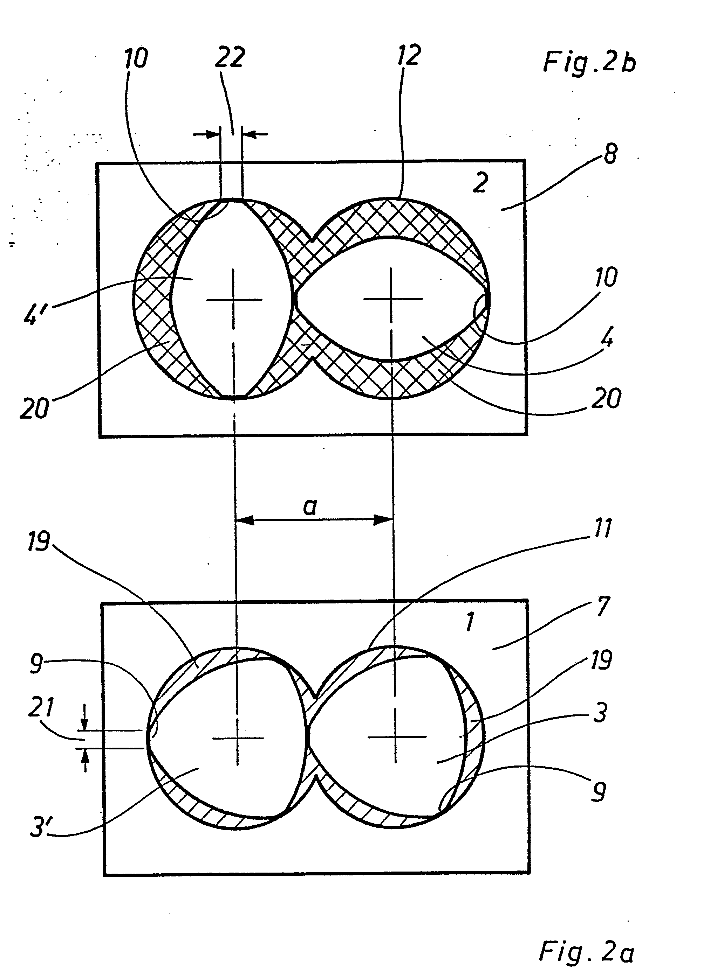

Anhand der Fig. 2a und 2b sei nunmehr die innere Gestaltung der Zonen 1 und 2 gemäß Fig. 1 näher erläutert.

Die Fig. 2a zeigt den Schnitt A-A aus Fig. 1 damit die beiden Schnecken 3 und 3' (von denen in Fig. 1 nur eine Schnecke 3 sichtbar ist), die in bekannter Weise derart miteinander kämmen, daß die Schnecken 3 und 3' selbstreinigend aufeinander einwirken. Die Schnecken 3 und 3' lassen gegenüber der Innenwand 11 des Gehäuses 7 den schraffiert gezeichneten freien Querschnitt 19 frei, der am Ende der Zone 1 größtenteils von plastifizierter Masse ausgefüllt ist. Fig. 2b zeigt einen Schnitt längs der Linie B-B aus Fig. 1, also durch die Schnecken 4 und 4' (von denen in der Fig. 1 nur die eine Schnecke 4 zu sehen ist). Die beiden Schnecken 4 und 4' kämmen ebenfalls derart miteinander, daß sie selbstreinigend aufeinander einwirken. Der zwischen den Schnecken 4 und 4' und der Innenwand 12 freigelassene freie ie Querschnitt 20 ist hier kreuzschraffiert gezeichnet.

Bei einem Vergleich der Fig. 2a und 2b zeigt sich, daß der freie Querschnitt 20 gegenüber dem freien Querschnitt 19 wesentlich größer ist, nämlich bei dem dargestellten Ausführungsbeispiel um das 2,4-fache. Außerdem sind die Schnecken 3 und 3' sowie 4 und 4' mit minimalen Breiten 21 bzw. 22 ihrer Kämme 9 und 10 ausgestattet, wodurch sich die vorstehend erwähnte erhebliche Vergrößerung des freien Querschnitts um das 2,4-fache ergibt.

Im übrigen ist den Fig. 2a und 2b noch zu entnehmen, daß die Schnecken 3 und 3' sowie 4 und 4' einen konstanten Achsabstand a aufweisen.

Das in den Fig. 2a und 2b dargestellte Ausführungsbeispiel zeigt darüberhinaus, daß sich die erhebliche Vergrößerung des freien Querschnitts um das 2,4-fache bei einer Durchmesservergrößerung der Gehäuse 7 und 8 ergibt, die nur das 1,13-fache beträgt. Dies bedeutet, daß das Gehäuse 8 gegenüber dem Gehäuse 7 äußerlich überhaupt nicht vergrößert werden muß. Darin liegt der überraschende Effekt der vorliegenden Erfindung, die trotz der relativ geringfügigen Durchmesservergrößerung zu einer ganz erheblichen Vergrößerung des freien Querschnitts kommt.

Bei den zu plastifizierenden Massen handelt es sich vorwiegend um Kunststoffe, die in der Wärme erwichen, wie sie ständig in Misch- und Knetmaschinen der eingangs erwähnten Art auch zur Verarbeitung kommen. Anstelle der plastifizierbaren Massen können auch bei Raumtemperatur flüssige Substanzen wie z.B. ungesättigte Polyester eingesetzt werden. An Zusatzmaterialien seien als Beispiel genannt: Glasfasern, Carbonfasern, mineralische Füllstoffe wie Kreide, Talkurn und dergleichen. Für die Herstellung von Masterbatches werden häufig größere Mengen Farbmittel wie beispielsweise Titandioxyd oder Ruß als Zusatzstoffe verwendet. Neben Feststoffen kommen auch Flüssigkeiten wie Lösungsmittel, Weichmacher und dergleichen als Zusatzmaterialien infrage.

## Patentansprüche

1. Mehrwellige, kontinuierlich arbeitende Misch- und Knetmaschine für plastifizierbare Massen, mit selbstreinigend ineinandergreifenden, gleichsinnig drehenden Schnecken (3, 3'; 4, 4') konstanten Achsabstandes, mit einer Aufschmelzzone (1) und einer sich hieran anschließenden Zone (2) vergrößerten freien Querschnitts für die Massen, wobei in dieser Zone (2) der Außendurchmesser der Schnecken vergrößert ist, <u>dadurch gekennzeichnet</u>, daß in der Zone (2) vergrößerten freien Querschnitts eine Einfüllöffnung (17) für Zusatzstoffe angeordnet ist und ferner die Gangzahl der Schnecken (4, 4') in diesem Bereich kleiner ist als die Gangzahl der Schnecken (3, 3') in der Aufschmelzzone (1).

2. Misch- und Knetmaschine nach Anspruch 1, dadurch gekennzeichnet, daß in der Aufschmelzzone (1) dreigängige Schnecken und in der darauffolgenden Zone zweigängige Schnecken vorgesehen sind.

3. Misch- und Knetmaschine nach Anspruch 1 oder 2, dadurch gekennzeichnet, daß in der Zone vergrößerten freien Querschnitts der freie Querschnitt mindestens das 1,5-fache des freien Querschnitts der Aufschmelzzone (1) ist.

## Claims

1. A multiple-shaft, continuous working, mixing and kneading machine, for plasticizable materials, having uni-directionally rotating, self-cleaning, interengaging screws (3, 3'; 4, 4') with a constant distance between their axes, and having a melting zone (1) and a following zone (2) with an enlarged clear cross-section for the materials, the external diameter of the screws being enlarged in this zone (2), characterised in that a feed opening (17) for additives is provided in the zone (2) of enlarged clear cross-section and furthermore the number of starts of the screws (4 4') in this region is smaller than the number of starts of the screws (3, 3') in the melting zone (1).

2. A mixing and kneading machine as claimed in Claim 1, characterised in that three-start screws are provided in the melting zone (1) and two-start screws in the following zone.

3. A mixing and kneading machine as claimed in Claim 1 or 2, characterised in that in the zone of enlarged clear cross-section, the clear cross-section is at least 1.5 times the clear cross-section of the melting zone (1).

## Revendications

1. Machine mélangeuse-malaxeuse, à plusieurs arbres, à fonctionnement continu, pour masses pouvant être ramollies, qui comporte, d'une part, des vis sans fin à sens de rotation identique, s'engageant l'une dans l'autre en vue de leur autonettoyage, la distance entre leurs axes étant constante et, d'autre part, une zone de fusion (1) prolongée par une zone (2) à plus grande section libre pour les masses, le diamètre extérieur des vis étant plus grand dans cette seconde zone (2), <u>caractérisée en ce que</u> une ouverture d'alimentation (17) pour l'introduction d'additifs est prévue dans la zone (2) de plus grande section libre et <u>en ce que</u> le nombre de pas des vis (4), (4') dans la zone (2) est plus petit que le nombre de pas des vis (3), (3') dans la zone de fusion (1).

2. Machine mélangeuse-malaxeuse selon la revendication 1 <u>caractérisée par</u> des vis sans fin à pas triple prévues dans la zone de fusion (1) et des vis sans fin à pas double prévues dans la zone (2) la prolongeant.

3. Machine mélangeuse-malaxeuse selon les revendications 1 et 2 <u>caractérisée en ce que</u> la section libre dans la zone (2) à plus grande section libre est d'au moins 1,5 fois plus grande que la section libre dans la zone de fusion (1).

Fig. 2b

Fig. 2a